# EUROPEAN PATENT SPECIFICATION

(11) **EP 2 511 453 B1**
(45) Date of publication and mention of the grant of the patent: **17.09.2014**
(21) Application number: 12175620.9
(22) Date of filing: 15.12.2005
(51) Int. Cl.: E05B 9/04, F16B 21/18, E05B 27/00, E05B 9/10

(54) **Clip for securing a lock barrel in a lock body**
Clip für die Befestigung eines Rotors in einem Schlosskörper
Clip pour la fixation d'un barillet dans un boîtier de serrure

(30) Priority: 16.12.2004 AU 2004907154
(43) Date of publication of application: 17.10.2012
(62) Divisional of application: 05815899.9
(73) Proprietor: TNBT Holdings Pty Limited, Moorebank, NSW 2170 (AU)
(72) Inventor: Butt, Simon James, Mascot, New South Wales 2020 (AU)
(74) Representative: Hawkins, Richard Dudley

(56) References cited:
- DE-U1- 8 526 663
- FR-A1- 2 347 510
- FR-A1- 2 797 290
- GB-A- 1 262 651
- JP-U- 54 073 436
- JP-U- 56 007 113
- JP-U- 61 182 412

## Description

### Technical Field

This invention is concerned with a lock body assembly for a double lock barrel assembly.

### Background Art

The invention in its various aspects has been designed for a double lock barrel assembly which can be installed in a door, for example, and enable keyed access from either side, usually operating a centrally located latch mechanism.

JP 61 182412 illustrates a generally planar clip having, at one end, two arms and, at the other end, a tab which projects out of the plane of the clip.

FR 2 797 290 describes a generally planar clip for a door lock, the clip having, at one end, two curved branches and, at the other end, a tongue which projects out of the plane of the clip which can be gripped for fitting and removing the clip.

Furthermore, FR 2 347 510 and DE-U-85 26 663 each discloses a lock body assembly and lock barrel, whereby the lock body assembly includes a main body and a plurality of pin tumbler passages and whereby the lock barrel includes a peripheral channel receiving a clip for securing the barrel in the main body.

### Disclosure of the Invention

Accordingly, this invention provides a lock body assembly as defined in claim 1, and in particular a clip including an extension for rotation between a position in which the extension protrudes from the body and a position in which it does not protrude.

It is preferred that the lock body assembly of the invention is one of a pair of lock body assemblies. In this embodiment, the second lock body assembly has a second main body for receipt of a second lock barrel. The second lock body assembly includes a plurality of pin tumbler passages, each communicating at one end with the second main body and being open at the other end. The second lock body assembly includes the second means for closing off the other end of the pin tumbler passages.

The closing off means may be made of any suitable material but is preferably of machined stainless steel. Similarly, the connecting means is preferably also machined from stainless steel. The closing off means preferably closes off all of the other end of the pin tumbler passages.

The main body is made of any suitable material. Preferably, it is extruded from brass. It is preferred that the pin tumbler passages are contained within a block attached to or formed with the main body.

It is preferred that a cap is provided for the lock body assembly of the invention. It is especially preferred that the cap covers the closing off means for the first and second lock body assemblies. Preferably, the cap is in one piece. The cap may be made from any suitable material but preferably is die cast from zinc and plated to the required finish.

The closing off means may take any suitable form. In one embodiment, the closing off means is generally cylindrical and designed to slide into an arcuate channel with which the other end of the pin tumbler passages communicate. In this embodiment, the closing off means preferably has a tongue with an aperture. The tongue is designed to mate with a similar tongue on the connecting means. In this embodiment, the tongue of the connecting means also contains an aperture. The aperture on the connecting means can line up with the aperture of the closing off means and both can be secured together by means of a screw. It is especially preferred that the same screw secures the cap to the connecting means and closing off means. It is further preferred that the apertures do not line up with any of the pin tumbler passages, although the apertures may be positioned between two adjacent pin tumbler passages and even overlap them.

In a second preferred embodiment, the closing off means is generally cylindrical with a central bore which can receive a cylindrical projection on the connecting means. In this embodiment, it is preferred that the closing off means can be slidably attached to a block containing the plurality of pin tumbler passages by a pair of tongue and groove arrangements.

Examples of both preferred embodiments are shown in the accompanying drawings.

Preferably, the channel on the lock barrel extends for most or all of the circumference of the lock barrel. It is preferred that the clip is roughly "Y" shaped, the region between the arms of the "Y" being approximately a little more than semicircular. During assembly of the lock barrel into the lock body assembly, the clip may be easily manipulated by holding the projection, in order to secure the lock barrel within the main body. Once the lock barrel is secured, the projection can be rotated out of the way into the silhouette of the lock body. Preferably, the projection is held in this configuration by the cap, if used. The projection may also be held in this position by the connecting means, which may include a suitable surface, such as a flat, for this purpose. To disassemble the lock barrel from the lock body assembly, when the cap is removed the projection may rotate under the influence of gravity. The projection can then be gripped and the clip withdrawn from engagement with the channel. It will be appreciated by one skilled in the art that this is a far superior clip to the conventional circlip, which can be difficult to access and difficult to remove from the assembly.

The clip may be made of any suitable material but preferably is punched from spring steel.

### Brief Description of the Drawings

The invention will now be described in connection with certain non-limiting examples thereof as illustrated in the accompanying drawings, in which:
Figure 1 is an exploded perspective view of a first embodiment of a lock body assembly of the invention, showing also an embodiment of the clip of 5 the invention and an embodiment of the cam assembly of the invention;
Figure 2 shows the embodiment of Figure 1 in assembled form;
Figure 3 is an exploded perspective view of a second embodiment of the lock body assembly of the invention, including a cap;
Figure 4 shows part of the second embodiment in Figure 3 in assembled form;
Figure 5 is an exploded perspective view of a third embodiment of the lock body assembly of the invention, including a cap, showing also a second embodiment of the clip of the invention;
Figure 6 shows in perspective view a stage in production of the lock body assembly of Figure 5;
Figure 7 shows the next stage in production, after machining of the part of assembly shown in Figure 6;
Figure 8 is a perspective view of half of the lock body assembly of Figure 5, assembled and in a larger scale;
Figure 9 is a perspective view of the assembled lock body assembly of Figures 5 to 8, without the cap; and
Figure 10 shows the assembly of Figure 9, with the cap.

### Detailed Description of the Drawings

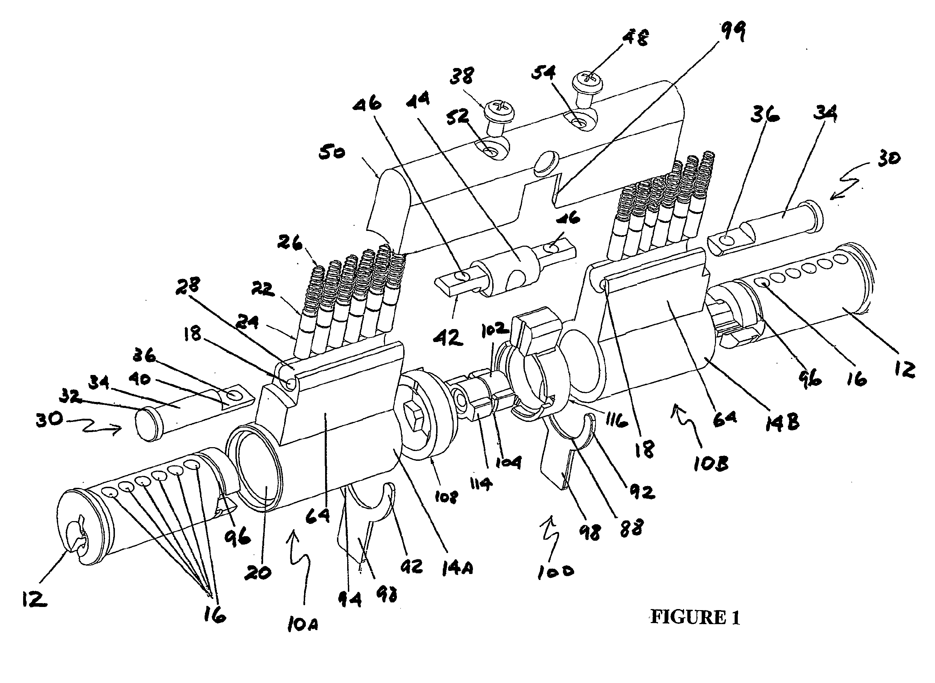

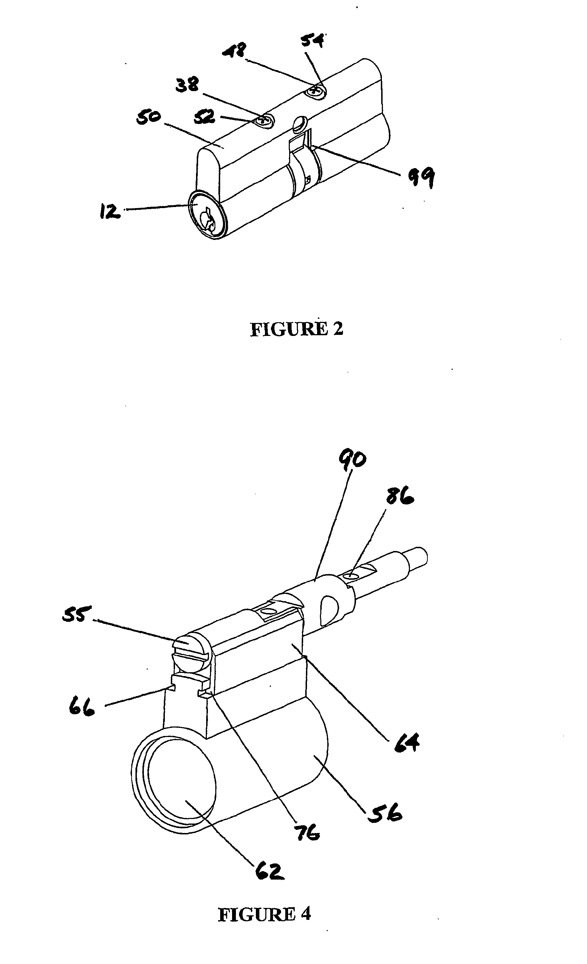

Referring first to Figures 1 and 2, the first lock body assembly 10A and second lock body assembly 10B are shown in the context of a double lock barrel assembly. Each lock barrel assembly includes a lock barrel 12 rotatably received in first main body 14A and second main body 14B. Each lock barrel 12 has six pin tumbler passages 16. When lock barrel 12 is inserted in place within main body 14A or main body 14B, each of pin tumbler passages 16 mates with a corresponding pin tumbler passage 18, only one of which can be seen in each of block 64. Each of pin tumbler passages 18 communicates at the lower end with cavity 20 in main body 14A and 14B and is open at the upper end. Upper pin parts 22 and lower pin parts 24 are loaded into pin tumbler passages 18 and 16 and biased by spring 26, in known manner.

Each block 64 includes arcuate channel 28. Closing off means 30 is designed to slide into arcuate channel 28 until further travel is prevented by ridge 32. In this configuration, bar 34 and flat 40 of closing off means 30 covers the six pin tumbler passages 18. Aperture 36 lies between the fifth and sixth pin tumbler passage 18 and is eventually secured by screw 38 as explained below.

Flat 40 of closing off means 30 is adapted to fit under and mate with flat 42 of connecting means 44. In this configuration, aperture 46 lines up with aperture 36. In this way, main body 14A, closing off means 30 and connecting means 44 are connected together and secured when screw 38 is inserted later (see below).

Likewise, main body 14B is assembled with closing off means 30 and connecting means 44, being secured together by screw 48 (see below) later inserted through apertures 46 and 36.

As shown in Figure 2, in the complete assembly, cap 50 is put in place to cover closing off means 30 in arcuate channel 28 and connecting means 44. Screw 38 is inserted through aperture 52 in cap 50 and then into apertures 46 and 36 as described above. Screw 48 is inserted in aperture 54 in cap 50 and then into apertures 46 and 36 as referred to above.

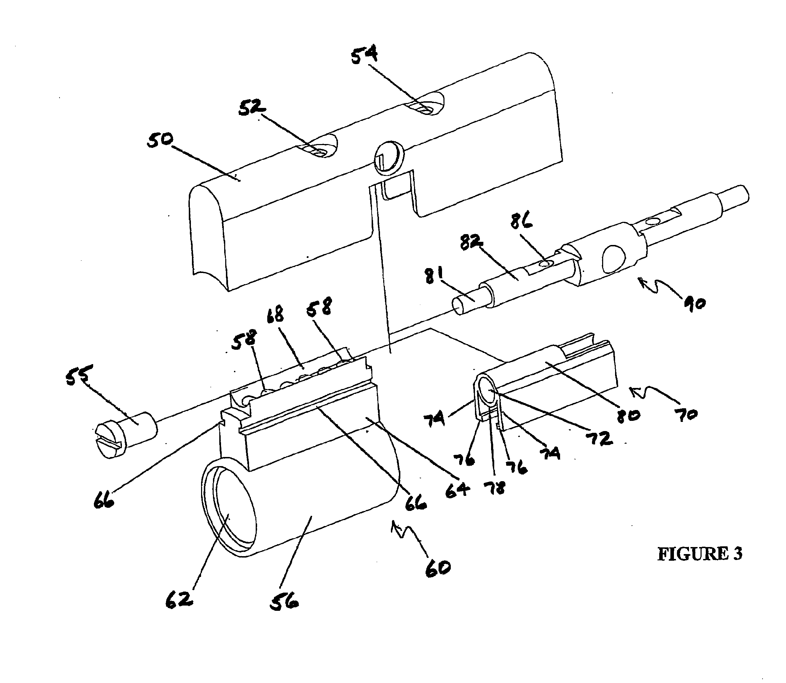

The second embodiment is shown in Figures 3 and 4. This embodiment can be substituted for lock body assemblies 10A and 10B, including closing off means 30 and connecting means 44 in Figures 1 and 2. Cap 50 is the same as in Figures 1 and 2. The same lock barrel 12, etc, can be used for the Figures 3 and 4 embodiment. Although only one lock body is shown in Figures 3 and 4, it is contemplated that an identical lock body will be used for the double lock barrel assembly, as in Figures 1 and 2.

In Figures 3 and 4, lock body 60 has main body 56 for receipt of a lock barrel (not shown). Lock body 60 includes six pin tumbler passages 58. Each pin tumbler passage 58 communicates with cavity 62 at its lower end and is open at its upper end.

Block 64 includes grooves 66 and arcuate channel 68. Arcuate channel 68 is considerably more shallow than arcuate channel 28 of Figure 1.

In this embodiment, closing off means 70 has passageway 72 and arms 74. Each arm 74 ends in tongue 76, adapted to be received in groove 66. Closing off means 70 can slide onto block 64 by engagement of tongues 76 in grooves 66, as shown in Figure 4. The lower part 78 of tube 80 enclosing passageway 72 closes off the six pin tumbler passages 58 in this configuration.

To connect to connecting means 90, cylindrical projection 82 of connecting means 90 slides into passageway 72. When cap 50 is put in place, a screw inserted through aperture 52 and aperture 86 secures the assembly. Screw 55 is secured to projection 81 of connecting means 90.

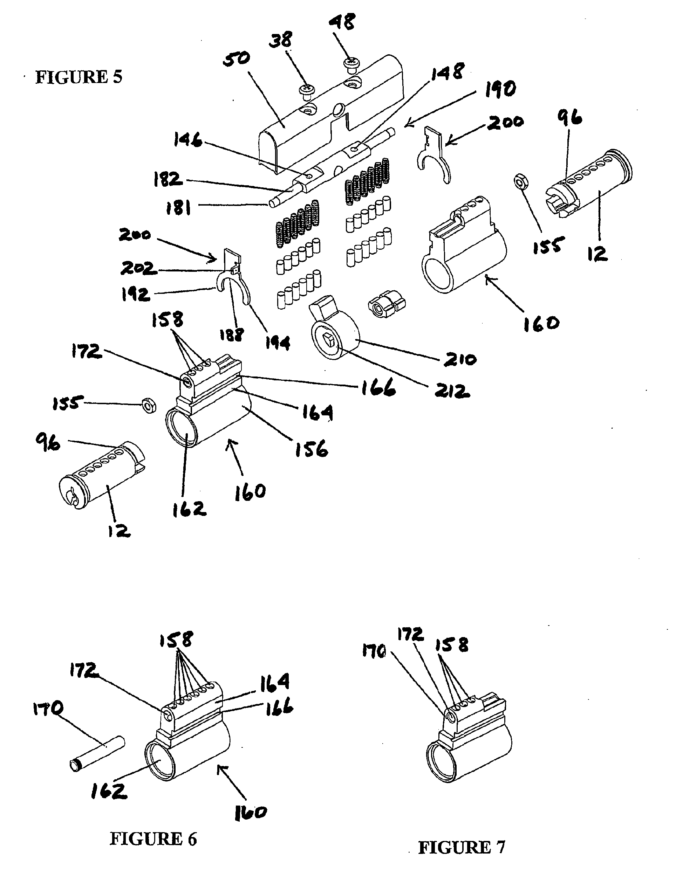

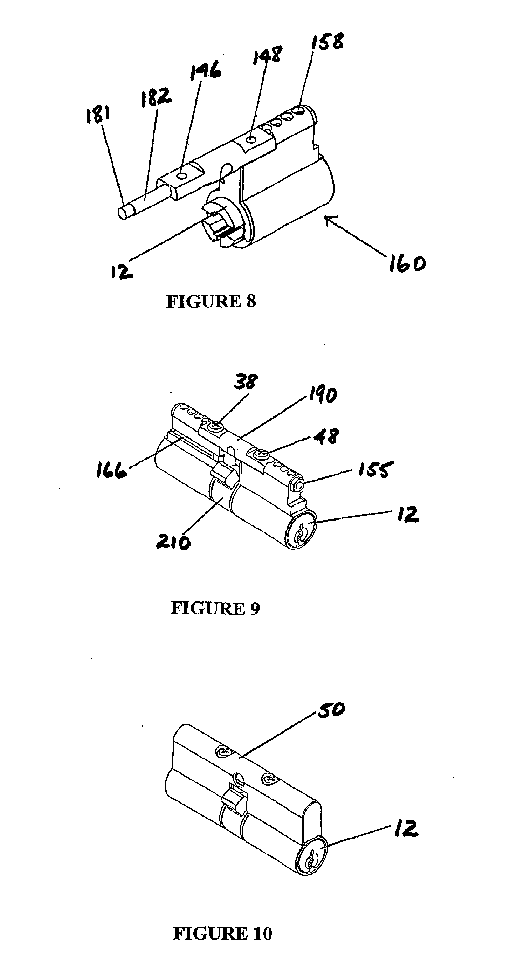

The third embodiment is shown in Figures 5 to 10. Cap 50 is the same as in Figures 1 and 2 and in Figure 3. The same lock barrel 12 is used.

In Figures 5 to 10, lock body 160 has main body 156 for receipt of lock barrel 12. Lock body 160 initially includes 6 pin tumbler passages 158. Some of these are affected by machining during assembly, as explained in relation to Figure 7, below. The pin tumbler passages 158 communicate with cavity 162 at their lower ends and are open at their upper ends.

Block 164 includes on one side groove 166 (for use in conjunction with clip 200: refer below) and is integrally formed with passageway 172. In this embodiment, closing off means 170 takes the form of a tubular insert which is inserted in passageway 172 during manufacture (refer Figure 6).

To connect to connecting means 190, cylindrical projection 182 slides into passageway 172. When cap 50 is put in place, screw 38 is fastened into aperture 146 while screw 48 is fastened into aperture 148.

End 181 of cylindrical projection 182 contains screw threads (not shown in the figure) to hold nut 155.

As part of manufacture of this embodiment, and with reference to Figure 6, pin tumbler passages 158 are drilled into block 164 from above, so that they communicate with cavity 162. Figure 6 shows block 164 before insertion of tubular insert 170. With reference to Figure 7, after tubular insert 170 is inserted into passageway 172, so as to close off pin tumbler passages 158, the sub-assembly is machined to cut away part of the top of block 164, as shown, to allow assembly of connecting means 190.

It will be seen that the third embodiment in Figures 5 to 10 has two other differences compared to the first embodiment in Figures 1 and 2. In the third embodiment, a second embodiment of clip is shown and the cam assembly is different. These are discussed further below.

Referring now to Figures 1 and 2, these show a first embodiment of clip 100. Two clips 100 are included in the total assembly illustrated.

Clip 100 is generally "Y" shaped, having first and second arms 92 and 94 forming, together with base 88, slightly more than a semicircle designed to fit into groove 96 in each lock barrel 12 when lock barrel 12 is fully inserted into main body 14A or 14B.

Clip 100 includes projection 98. When lock barrel 12 is inserted in main body 14B, for example, groove 96 projects beyond main body 14B and arms 92 and 94 can be inserted in groove 96 in order to secure lock barrel 12 in main body 14B. Projection 98 can be manipulated to rotate clip 100 so that projection 98 is moved up into alignment with block 64. Projection 98 is held by edge 99 of cap 50, and also by flat 42 of connecting means 44.

When it is desired to remove lock barrel 12 from main body 14B, cap 50 is removed. This enables clip 100 to rotate so that projection 98 is free and clip 100 can be pulled away from groove 96. In some circumstances it may take a skilled locksmith a significant amount of time to remove a conventional circlip from engagement with a lock barrel. It will be appreciated that the clip of the present invention can greatly expedite disassembly.

Clip 200 in Figure 5 is also generally "Y" shaped, with first and second arms 192 and 194 forming, together with base 188, slightly more than a semicircle, designed to fit into groove 96 in each lock barrel 12 when lock barrel is fully inserted into main body 156.

In this embodiment, in comparison to clip 100 in Figure 1, clip 200 includes flange 202 on projection 198. Projection 198 operates in much the same way as projection 98 in relation to clip 100 in the first embodiment. However, flange 202 is designed to fit into groove 166 in block 164 when clip 200 is rotated as described in connection with Figure 1. The fitting of flange 202 into groove 166 serves to lift clip 200 slightly, to alleviate friction and wear.

Also shown in Figures 1 and 2 is an embodiment of a cam assembly. This has inner cam part 102, in this embodiment formed of a single part with a groove 104.

### Industrial Applicability

The invention, in providing an improved lock body assembly for a double lock barrel assembly, has ready application industrially. The clip provides improvements and efficiencies in connection with the lock body assembly.

## Claims

1. A lock body assembly (10A; 60; 160) and first lock barrel (12) for a double lock barrel assembly, the lock body assembly (10A; 60; 160) further including:
a) a main body (14A; 56; 156) for receipt of the first lock barrel (12); and
b) a plurality of pin tumbler passages (18; 58; 158), each communicating at one end with the main body (14A; 56; 156);
whereby:
c) said plurality of pin tumbler passages (18; 58; 158) are each open at the other end;
and whereby said lock body assembly (10A; 60; 160) further comprises:
d) means (30; 70; 170) for closing off the other end of the pin tumbler passages (18; 58; 158); and
e) means (44) for connecting the closing off means (30; 70; 170) with a second closing off means (30; 70; 170) for a second lock body assembly (10B; 60; 160);
and whereby:
the lock body assembly (10A 160) is provided with a clip (100; 200) for securing the first lock barrel (12) in the main body (14A; 56: 156); and
the lock barrel (12) includes a peripheral channel (96) adapted to receive the clip (100; 200) when the lock barrel (12) is inserted in the main body (14A; 56; 156), wherein the clip (100; 200) includes an extension (98; 198) for rotating the clip (100; 200) between a first position in which the extension (98; 198) protrudes from the body (14A; 56; 156) and a second position in which the extension (98; 198) does not so protrude.

2. The lock body assembly (10A; 160) and first lock barrel (12) of claim 1, wherein the clip (100; 200) includes first and second arms (92, 94; 192; 194).

3. The lock body assembly (160) and first lock barrel (12) of claim 1 or claim 2, wherein the clip (200) includes a flange (202) adapted to fit into the main body (156).

## Patentansprüche

1. Schlosskörperanordnung (10A; 60; 160) und erster Schlosszylinder (12) für eine Doppelschlosszylinderanordnung, wobei die Schlosskörperanordnung (10A; 60; 160) weiter Folgendes umfasst:
a) einen Hauptkörper (14A; 56; 156) zur Aufnahme des ersten Schlosszylinders (12); und
b) mehrere Stiftzuhaltungsdurchgänge (18; 58; 158), die jeweils an einem Ende mit dem Hauptkörper (14A; 56; 156) in Verbindung stehen;
wobei:
c) die mehreren Stiftzuhaltungsdurchgänge (18; 58; 158) jeweils am anderen Ende offen sind;
und wobei die Schlosskörperanordnung (10A; 60; 160) weiter Folgendes umfasst:
d) Mittel (30; 70; 170) zum Verschließen des anderen Endes der Stiftzuhaltungsdurchgänge (18; 58; 158); und
e) Mittel (44) zum Verbinden des Verschlussmittels (30; 70; 170) mit einem zweiten Verschlussmittel (30; 70; 170) für eine zweite Schlosskörperanordnung (10B; 60; 160);
und wobei
die Schlosskörperanordnung (10A; 160) mit einem Clip (100; 200) zum Befestigen des ersten Schlosszylinders (12) in dem Hauptkörper (14A; 56; 156) versehen ist; und
der Schlosszylinder (12) eine Umfangsrille (96) umfasst, die dazu angepasst ist, den Clip (100; 200) aufzunehmen, wenn der Schlosszylinder (12) in den Hauptkörper (14A; 56; 156) eingefügt wird, wobei der Clip (100; 200) eine Verlängerung (98; 198) umfasst, um den Clip (100; 200) zwischen einer ersten Stellung, in der die Verlängerung (98; 198) aus dem Körper (14A; 56; 156) vorsteht und einer zweiten Stellung, in der die Verlängerung (98; 198) nicht derart vorsteht, zu drehen.

2. Schlosskörperanordnung (10A; 160) und erster Schlosszylinder (12) nach Anspruch 1, wobei der Clip (100; 200) einen ersten und einen zweiten Arm (92, 94; 192; 194) umfasst.

3. Schlosskörperanordnung (160) und erster Schlosszylinder (12) nach Anspruch 1 oder Anspruch 2, wobei der Clip (200) einen Flansch (202) umfasst, der dazu angepasst ist in den Hauptkörper (156) zu passen.

## Revendications

1. Ensemble de corps de serrure (10A ; 60 ; 160) et premier barillet (12) pour un ensemble à double barillet, l'ensemble de corps de serrure (10A ; 60 ; 160) comprenant en outre :
a) un corps principal (14A ; 56 ; 156) destiné à recevoir le premier barillet (12) ; et
b) une pluralité de passages de gorges à levier (18 ; 58 ; 158), chacun communiquant au niveau d'une extrémité avec le corps principal (14A ; 56 ; 156);
de telle sorte que
c) ladite pluralité de passages de gorges à levier (18 ; 58 ; 158) sont chacun ouverts au niveau de l'autre extrémité ;
et de telle sorte que ledit ensemble de corps de serrure (10A ; 60 ; 160) comprend en outre :
d) des moyens (30 ; 70 ; 170) destinés à fermer l'autre extrémité des passages de gorges à levier (18 ; 58 ; 158) ; et
e) des moyens (44) destinés à raccorder les moyens de fermetures (30 ; 70 ; 170) avec des seconds moyens de fermeture (30 ; 70 ; 170) pour un second ensemble de corps de serrure (10B ; 60 ; 160) ;
et de telle sorte que :
l'ensemble de corps de serrure (10A, 160) est doté d'une attache (100 ; 200) destinée à fixer le premier barillet (12) dans le corps principal (14A ; 56 ; 156) ; et
le barillet (12) comprend un canal périphérique (96) adapté pour recevoir l'attache (100 ; 200) lorsque le barillet (12) est inséré dans le corps principal (14A ; 56 ; 156), dans lequel l'attache (100 ; 200) comprend une extension (98 ; 198) destinée à mettre en rotation l'attache (100 ; 200) entre une première position dans laquelle l'extension (98 ; 198) fait saillie à partir du corps (14A ; 56 ; 156) et une seconde position dans laquelle l'extension (98 ; 198) ne fait pas ainsi saillie.

2. Ensemble de corps de serrure (10A ; 160) et premier barillet (12) selon la revendication 1, dans lequel l'attache (100 ; 200) comprend des premier et second bras (92, 94 ; 192 ; 194).

3. Ensemble de corps de serrure (160) et premier barillet (12) selon la revendication 1 ou la revendication 2, dans lequel l'attache (200) comprend une bride (202) adaptée pour être inséré dans le corps principal (156).
